# EUROPÄISCHE PATENTSCHRIFT

(11) **EP 2 291 303 B1**
(45) Veröffentlichungstag und Bekanntmachung des Hinweises auf die Patenterteilung: **24.10.2012**
(21) Anmeldenummer: 09765677.1
(22) Anmeldetag: 30.04.2009
(51) Int. Cl.: B60S 1/38

(54) **WISCHBLATT**
WIPER BLADE
BALAI D'ESSUIE-GLACE

(30) Priorität: 16.06.2008 DE 102008002447
(43) Veröffentlichungstag der Anmeldung: 09.03.2011
(73) Patentinhaber: Robert Bosch GmbH, 70442 Stuttgart (DE)
(72) Erfinder: OP'T ROODT, Inigo, B-3500 Hasselt (BE); DE BLOCK, Peter, B-3545 Halen (BE); BEELEN, Hans, B-3540 Herk de Stad (BE); FATAN, Bart, B-3510 Kermt (BE); WINDMOLDERS, Eric, B-3510 Kermt (BE)
(86) Internationale Anmeldenummer: PCT/EP2009/055257
(87) Internationale Veröffentlichungsnummer: WO 2009/153097

(56) Entgegenhaltungen:
- EP-A- 0 625 452
- EP-A- 1 574 410
- EP-A- 1 602 540
- DE-U1-202006 015 206
- JP-A- 2007 269 170

## Beschreibung

### Stand der Technik

Die Erfindung geht von einem Wischblatt nach dem Oberbegriff des Anspruchs 1 aus.

Aus der DE 198 01 058 A1 ist ein Wischblatt bekannt, das als Tragelement eine bandartig lang gestreckte, metallische, zur Scheibenoberfläche konkav gekrümmte Federschiene besitzt. Diese ist in einem Längskanal eines Trägers aus Kunststoff untergebracht. Der Träger ist in seinem Mittelabschnitt quer geteilt, sodass die Trägerteile von den Enden auf die Federschiene aufgeschoben werden können. Die Trägerteile können an den einander anliegenden Trennkanten durch Kleben, Schweißen oder dgl. miteinander verbunden werden. Ein Anschlusselement, das mit dem Träger oder der Federschiene fest verbunden ist, dient zum gelenkigen Verbinden des Wischblatts mit einem Wischarm. Im Betrieb gleitet das Wischblatt mit einer Wischleiste über eine Fahrzeugscheibe. Die Wischleiste wird von Halteschienen gehalten, die an dem Träger angeformt sind und in zwei Längsnuten der Wischleiste eingreifen. Dabei ist die Federschiene auf einer Seite der Wischleiste angeordnet, die einer Wischlippe der Wischleiste abgewandt ist.

Ferner ist aus der DE 10 2004 019 158 A1 ein Wischblatt bekannt, bei dem zwei bandartige, vorgebogene Federschienen seitlich in Längsnuten einer Kopfleiste einer Wischleiste des Wischblatts eingesetzt sind. Auf den aus den Längsnuten seitlich vorstehenden Teilen der Federschienen ist ein Träger geführt, der die Federschienen zusammenhält und nach außen hin schützt. Der Träger besitzt auf der einer Wischlippe der Wischleiste abgewandten Seite ein Halteprofil für einen Spoiler. Im mittleren Bereich des Wischblatts ist eine Anschlussvorrichtung vorgesehen, um das Wischblatt mit einem Wischarm gelenkig zu verbinden.

Aus der DE 20 2006 015 206 U1 ist ein gattungsgemäßes Wischblatt bekannt, das eine sich über die Länge des Wischblatts erstreckende Befestigungsplatte besitzt, welche zwei Durchgangslöcher hat, die an zwei gegenüberliegenden Seiten der Befestigungsplatte ausgebildet sind. Ein Innenbereich zwischen den Durchgangslöchern besitzt Gleitführungen für eine Wischleiste. Zwei Stahldrähte, die als Federstäbe dienen, sind in die Durchgangslöcher eingesetzt. Auf der der Wischleiste abgewandten Seite der Befestigungsplatte sind zu beiden Seiten eines Anschlusselements, das auf der Befestigungsplatte befestigt ist, Schutzkappen in Form von Spoilern gleitend befestigt, an deren Enden Seitenabdeckungen in Form von Endkappen vorgesehen sind.

### Offenbarung der Erfindung

An den äußeren Längsseiten der Halteschienen ist jeweils ein Längskanal angeordnet, der mit den Halteschienen eine gemeinsame Deckwand und mit der zugeordneten Halteschiene eine gemeinsame, zu einer äußeren Seitenwand parallel verlaufende Trennwand besitzt, wobei die äußere Begrenzung der Halteschienen quer zur Seitenwand innerhalb der entsprechenden Begrenzung der Längskanäle liegt, in denen jeweils ein Tragelement gelagert ist. Somit ergibt sich ein sehr leichtes, flaches Wischblatt, insbesondere dadurch, dass die von der Wischlippe abgewandte Fläche der Kopfleiste der Wischleiste etwa mit den Tragelementen abschließt. Dabei schützt der äußerst flache Träger die Tragelemente und die Kopfleiste optimal, ohne die elastische Biegsamkeit senkrecht zur Wischebene nennenswert zu beeinträchtigen. Die Tragelemente können Federstäbe mit runden Querschnitten oder Federschienen mit rechteckigen Querschnitten sein, deren Breitseiten quer zu den Seitenwänden der Längskanäle verlaufen. Nach der Erfindung wird vorgeschlagen, dass der Träger aus mehreren Trägerteilen zusammengesetzt ist und zwischen einem mittleren Trägerteil und zwei weiteren jeweils auf einer Stirnseite dazu angeordneten Trägerteilen Zwischenstücke vorgesehen sind, die ebenfalls Längskanäle für die Tragelemente haben und Gelenkelemente zum gelenkigen Verbinden des Anschlusselements besitzen. Durch die gelenkige Anbindung des Anschlusselements an den Träger wird vermieden, dass das Anschlusselement im mittleren Bereich die Nachgiebigkeit der Wischleiste beeinträchtigt. Trotzdem werden die Anpresskräfte über die Gelenkelemente, die in Längsrichtung einen großen Abstand zueinander haben, auf den Träger übertragen, wodurch sich eine gute Kraftverteilung in Längsrichtung des Wischblatts ergibt. Zur eindeutigen Lagefixierung des Brückenteils relativ zu den Tragelementen ist zweckmäßig, dass mindestens eines der Zwischenstücke auf den Tragelementen fixiert ist, z. B. durch Kleben oder Ultraschallschweißen.

Die Krafteinleitung wird noch dadurch verbessert, dass das Anschlusselement fest auf einem Brückenteil sitzt, das mit seitlichen Wangen die Zwischenstücke umfasst und mit Naben auf den Gelenkelementen gelagert ist. Die seitlichen Wangen des Brückenteils erhöhen seine Formsteifigkeit, sodass die elastische Nachgiebigkeit des Wischblatts vor allem durch die Federschienen bestimmt wird und sich eine hervorragende seitliche Führung des Trägers relativ zum Anschlusselement ergibt.

Die Trägerteile und Zwischenstücke werden lose auf die Tragelemente aufgefädelt. Abschließend werden die Endkappen montiert und an den Tragelementen durch Schweißen oder Kleben befestigt. Um das Anschlusselement eindeutig in Längsrichtung zu den Tragelementen zu positionieren, ist es zweckmäßig, mindestens ein Zwischenstück ebenfalls an den Tragelementen zu fixieren. Es besteht auch die Möglichkeit, stattdessen die Trägerteile, die Zwischenstücke und die Endkappen untereinander zu verbinden, sodass vom Träger nur die Endkappen mit den Tragelementen fest verbunden sind, während die Tragelemente in Längsrichtung im Übrigen in den Längskanälen frei liegen.

Zweckmäßigerweise wird die Wischleiste in einem zweistoffigen Extrusionsverfahren hergestellt, wobei der von den Halteschienen umfasste Teil der Kopfleiste und der Steg zwischen den Längsnuten aus einem steiferen Material bestehen als die übrige Wischleiste. Somit kann die Wischleiste leicht und einfach zwischen die Halteschienen des Trägers eingefädelt werden. Außerdem ergeben sich geringe Reibungskräfte bei der elastischen Biegung der Wischleiste während des Betriebs.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines erfindungsgemäßen Wischblatts,
- Fig. 2: eine perspektivische Ansicht zweier Federstäbe mit einem mittleren Trägerteil,
- Fig. 3: eine perspektivische Ansicht zweier Federstäbe mit dem mittleren Trägerteil und zwei Zwischenstücken,

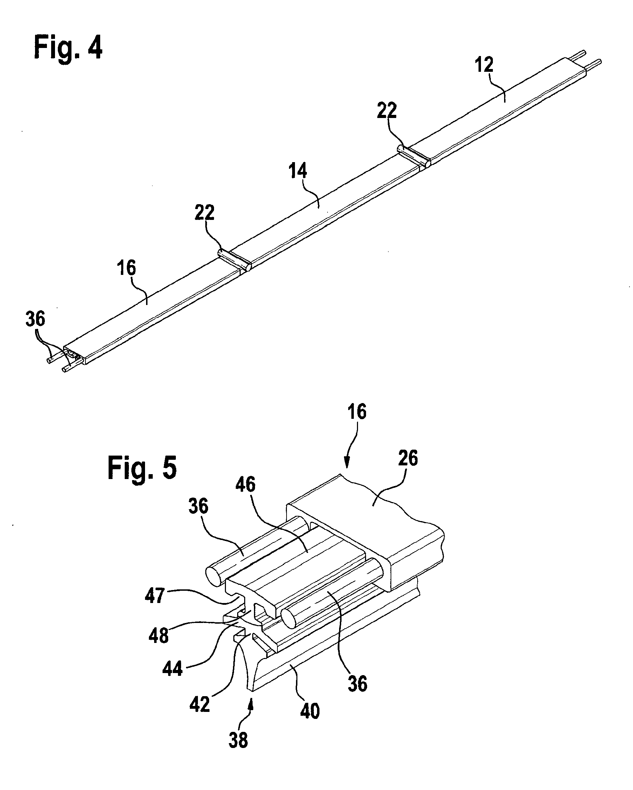

- Fig. 4: eine perspektivische Ansicht zweier Federstäbe mit drei Trägerteilen und zwei Zwischenstücken,
- Fig. 5: ein Ende eines Wischblatts nach Fig. 1 im vergrößerten Maßstab ohne Endkappe und

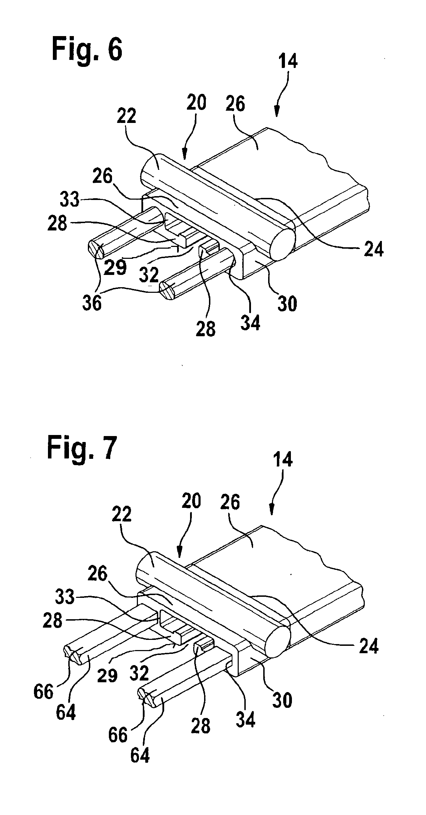

- Fig. 6: ein Zwischenstück nach Fig. 3 im vergrößerten Maßstab,
- Fig. 7: eine Variante zu Fig. 5.

### Ausführungsformen der Erfindung

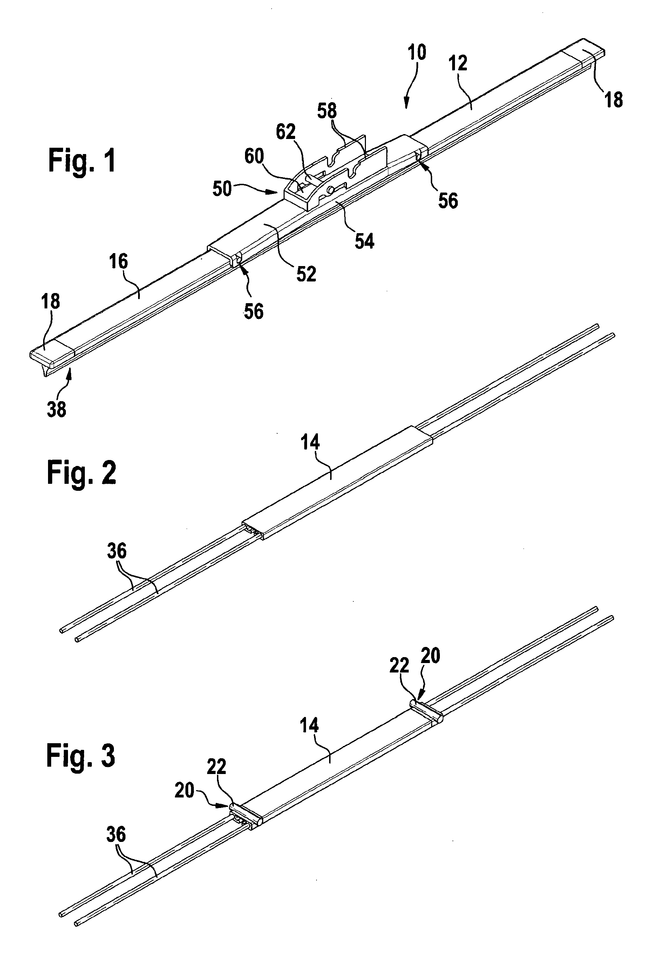

Ein Wischblatt 10 nach Fig. 1 umfasst einen Träger mit drei Trägerteilen 12, 14, 16, zwei Endkappen 18, eine Wischleiste 38 und ein Anschlusselement 50 zum gelenkigen Verbinden mit einem nicht näher dargestellten Wischarm. Zwischen dem mittleren Trägerteil 14 und den nach außen anschließenden Trägerteilen 12 und 16 sind Zwischenstücke 20 vorgesehen.

Die Trägerteile 12, 14, 16 und die Zwischenstücke 20 sowie die Endkappen 18 sind im Querschnitt im Wesentlichen gleich gestaltet. Sie besitzen eine Deckwand 26, an die sich an beiden Längsseiten Seitenwände 30 anschließen. Nach innen abgewinkelt sind an den freien Kanten der Seitenwände 30 Halteschienen 32 angeformt, die zwischen sich einen Längsspalt 32 bilden. An den Längsseiten sind zwischen der Deckwand 26, den Seitenwänden 30 und den Halteschienen 28 Längskanäle 34 vorgesehen. Die Trägerteile 12, 14, 16 und die Zwischenstücke 20 werden einzeln von den Enden auf Tragelemente aufgefädelt, die als Federstäbe 36 mit runden Querschnitten oder als Federschienen 64 mit rechteckigen Querschnitten ausgebildet sein können. Zum Schluss werden Endkappen 18 auf die Tragelemente 36, 64 montiert und mit diesen durch Kleben oder Schweißen, insbesondere Ultraschallschweißen, fest verbunden. Zusätzlich kann mindestens eins der Zwischenstücke 20 mit den Tragelementen 36, 64 fest verbunden werden. Eine weitere Möglichkeit besteht darin, dass die Trägerteile 12, 14, 16 und die Zwischenstücke 20 stirnseitig durch Schweißen, insbesondere Ultraschallschweißen, oder Kleben miteinander und die Endteile 12, 16 mit den Endkappen 18 verbunden werden. Dies kann geschehen, wenn die Teile 12, 14, 16, 18, 20 auf den Tragelementen 36, 64 montiert sind oder bis auf eine der Endkappen 18, bevor sie auf die Tragelemente 36, 64 montiert werden.

Die Endkappen 18 sind an ihrer äußeren Stirnseite geschlossen, sodass die Federstäbe 36 in Längsrichtung gesichert sind. Zusätzlich kann es nützlich sein, mindestens eine der Endkappen 18 und/oder eines der Zwischenstücke 20 mit den Tragelementen 36, 64 fest zu verbinden.

Der Querschnitt der Wischleiste 38 ist in üblicher, bewährter Weise aufgebaut. Eine keilförmige Wischlippe 40 ist über einen Kippsteg 42 mit der Kopfleiste 46 verbunden. Diese besitzt zur Wischlippe 40 hin Stützleisten 44, an denen sich bei der Wischbewegung jeweils eine der gegenüberliegenden Flächen der Wischlippe 40 abstützt.

Um die Montage der Wischleiste 38 zu erleichtern, ist die Wischleiste 38 in einem Zweistoffextrusionsverfahren aus zwei unterschiedlichen Materialien hergestellt, und zwar der Steg 48 zwischen den Längsnuten 47 und der von den Halteschienen 28 umfasste Teil der Kopfleiste 46 aus einem härteren, steiferen Werkstoff als der übrige Teil der Wischleiste 38.

Das Anschlusselement 50 wird gelenkig mit dem Träger 12, 14, 16, 18, 20 verbunden. Hierzu besitzen die Zwischenstücke 20 auf der dem Anschlusselement 50 zugewandten Seite Gelenkelemente 22, die seitlich über die Seitenwände 30 der Zwischenstücke 20 vorstehen. Auf diesen ist ein Brückenteil 52 mittels Naben 56 gelenkig gelagert. Die Naben 56 befinden sich in seitlichen Wangen 54, mit denen das Brückenteil 52 die Zwischenstücke 20 seitlich umfasst. Zwischen den Gelenkelementen 22 bildet das Brückenteil 52 einen Freiraum für das Trägerteil 14, sodass sich die Wischleiste 38 einer Krümmung einer Fahrzeugscheibe frei anpassen kann. Dabei wird die Anpresskraft des Wischarms günstig über die Gelenkelemente 22 auf die Wischleiste 38 übertragen.

Auf der der Wischleiste 38 abgewandten Seite des Brückenteils 52 ist an diesem das Anschlusselement 50 befestigt. Es kann eine beliebige bekannte Bauform haben. Im vorliegenden Fall besitzt es einen Boden 60, der in geeigneter Weise durch Nieten, Schweißen, Kleben, Klipsen oder dgl. mit dem Brückenteil 52 verbunden ist. Von dem Boden 60 aus sind zwei in Längsrichtung sich erstreckende Seitenteile 58 entgegengesetzt zur Wischlippe 40 abgewinkelt. Die Seitenteile 58 tragen zwischen sich als Lagerelement einen Gelenkbolzen 62, über den das Wischblatt 10 mit dem nicht dargestellten Wischarm gelenkig verbunden werden kann.

## Patentansprüche

1. Wischblatt (10) mit einem Träger, das mindestens einen Längskanal (34) mit mindestens einem vorgebogenen elastischen Tragelement (36, 64) sowie zwei parallelen, durch einen Längsspalt (32) getrennte Halteschienen (28) für eine Wischleiste (38) besitzt, wobei im mittleren Bereich des Wischblatts (10) ein Anschlusselement (50) zum gelenkigen Verbinden mit einem Wischarm angeordnet ist, wobei an den äußeren Längsseiten der Halteschienen (28) jeweils ein Längskanal (34) angeordnet ist, der mit den Halteschienen (28) eine gemeinsame Deckwand (26) und mit der zugeordneten Halteschiene (28) eine gemeinsame, zu einer äußeren Seitenwand (30) parallel verlaufende Trennwand (33) besitzt, wobei die äußere Begrenzung der Halteschienen (28) quer zur Seitenwand (30) innerhalb der entsprechenden Begrenzung der Längskanäle (34) liegt, in denen jeweils ein Tragelement (36, 64) gelagert ist, **dadurch gekennzeichnet, dass** der Träger aus mehreren Trägerteilen (12, 14, 16, 18, 20) zusammengesetzt ist und zwischen einem mittleren Trägerteil (14) und jeweils auf jeder Seite dazu angeordneten, zwei weiteren Trägerteilen (12, 16) Zwischenstücke (20) vorgesehen sind, die ebenfalls Längskanäle (34) für die Tragelemente (36, 64) haben und Gelenkelemente (22) zum gelenkigen Verbinden des Anschlusselements (50) besitzen.

2. Wischblatt (10) nach Anspruch 1, **dadurch gekennzeichnet, dass** die Tragelemente Federschienen (64) mit rechteckigen Querschnitten sind, deren Breitseiten (66) quer zu den Seitenwänden (30) der Längskanäle (34) verlaufen.

3. Wischblatt (10) nach Anspruch 1, **dadurch gekennzeichnet, dass** eines der Zwischenstücke (20) mit den Tragelementen (36, 64) fest verbunden ist.

4. Wischblatt (10) nach einem der Ansprüche 1 bis 3, **dadurch gekennzeichnet, dass** die Trägerteile (12, 14, 16, 18, 20) durch Schweißen, insbesondere Ultraschallschweißen, Kleben oder dgl. untereinander verbunden sind.

5. Wischblatt (10) nach einem der Ansprüche 1 bis 4, **dadurch gekennzeichnet, dass** das Anschlusselement (50) fest auf einem Brückenteil (52) sitzt, das mit seitlichen Wangen (54) die Zwischenstücke (20) umfasst, und mit Naben (56) auf den Gelenkelementen (22) gelagert ist.

6. Wischblatt (10) nach Anspruch 1, **dadurch gekennzeichnet, dass** die Wischleiste (38) eine Kopleiste (46) mit zwei durch einen Stez (48) getrennten Längsnuten (48) getrennten Länsgsnuten (47) besitzt, in die die Halteschienen (28) eingreifen, wobei die Tragelemente (36) in den Längskamalen (34) seitlich der kopfleiste (46) Verlaufn, und eine Wischlippe (40) über einen Kippsteg (42) mit der Kopfleiste (46) verbunden ist sind die Wischleiste (38) in einem Zweistoffextrusionsverfahren hergestellt ist, wobei der von den Halteschienen (28) umfasste Teil und der Steg (48) zwischen den Längsnuten (47) aus einem steiferen Material besteht als die übrige Wischleiste (38).

## Claims

1. Wiper blade (10) with a support which has at least one longitudinal channel (34) with at least one pre-bent elastic supporting element (36, 64) and two parallel holding rails (28), which are separated by a longitudinal gap (32), for a wiper strip (38), wherein a connection element (50) for the articulated connection to a wiper arm is arranged in the central region of the wiper blade (10), wherein a longitudinal channel (34) is arranged on each of the outer longitudinal sides of the holding rails (28), said longitudinal channel having a common top wall (26) with the holding rails (28) and, with the associated holding rail (28), a common partition (33) running parallel to an outer side wall (30), and wherein the outer boundary of the holding rails (28) lies transversely with respect to the side wall (30) within the corresponding boundary of the longitudinal channels (34), in each of which a supporting element (36, 64) is mounted, **characterized in that** the support is composed of a plurality of support parts (12, 14, 16, 18, 20), and intermediate pieces (20) are provided between a central support part (14) and in each case two further support parts (12, 16) arranged on each side with respect thereto, said intermediate pieces likewise having longitudinal channels (34) for the supporting elements (36, 64) and having articulation elements (22) for the articulated connection of the connection element (50).

2. Wiper blade (10) according to Claim 1, **characterized in that** the supporting elements are spring rails (64) with rectangular cross sections, the wide sides (66) of which run transversely with respect to the side walls (30) of the longitudinal channels (34).

3. Wiper blade (10) according to Claim 1, **characterized in that** one of the intermediate pieces (20) is fixedly connected to the supporting elements (36, 64).

4. Wiper blade (10) according to one of Claims 1 to 3, **characterized in that** the support parts (12, 14, 16, 18, 20) are connected to one another by welding, in particular ultrasonic welding, adhesive bonding or the like.

5. Wiper blade (10) according to one of Claims 1 to 4, **characterized in that** the connection element (50) sits fixedly on a bridge part (52) which surrounds the intermediate pieces (20) by means of lateral cheeks (54) and is mounted by means of hubs (56) on the articulation elements (22).

6. Wiper blade (10) according to Claim 1, **characterized in that** the wiper strip (38) has a head strip (46) having two longitudinal grooves (47) which are separated by a web (48) and in which the holding rails (28) engage, wherein the supporting elements (36) run in the longitudinal channels (34) to the side of the head strip (46), and a wiper lip (40) is connected to the head strip (46) via a tilting web (42), and the wiper strip (38) is produced in a two-material extrusion process, the part surrounded by the holding rails (28) and the web (48) between the longitudinal grooves (47) being composed of a stiffer material than the rest of the wiper strip (38).

## Revendications

1. Balai d'essuie-glace (10), comprenant un support qui possède au moins un canal longitudinal (34) muni d'au moins un élément de support élastique précintré (36, 64) ainsi que de deux rails de retenue (28) pour une raclette de balai d'essuie-glace (38), parallèles et séparés par une fente longitudinale (32), un élément de raccordement (50) pour la liaison articulée à un bras d'essuie-glace étant disposé dans la région centrale du balai d'essuie-glace (10), un canal longitudinal (34) respectif étant disposé sur les côtés longitudinaux extérieurs des rails de retenue (28), lequel canal longitudinal possède une paroi de recouvrement (26) commune avec les rails de retenue (28) et une paroi de séparation (33) commune avec le rail de retenue associé (28), laquelle paroi de séparation s'étend parallèlement à une paroi latérale extérieure (30), la délimitation extérieure des rails de retenue (28) se situant transversalement par rapport à la paroi latérale (30) à l'intérieur de la délimitation correspondante des canaux longitudinaux (34) dans lesquels un élément de support (36, 64) respectif est monté, **caractérisé en ce que** le support est assemblé à partir de plusieurs parties de support (12, 14, 16, 18, 20), et des pièces intermédiaires (20) sont prévues entre une partie de support centrale (14) et deux parties de support supplémentaires (12, 16) disposées respectivement de chaque côté de celle-ci, lesquelles pièces intermédiaires ont également des canaux longitudinaux (34) pour les éléments de support (36, 64) et possèdent des éléments d'articulation (22) pour la liaison articulée de l'élément de raccordement (50).

2. Balai d'essuie-glace (10) selon la revendication 1, **caractérisé en ce que** les éléments de support sont des rails élastiques (64) présentant des sections transversales rectangulaires dont les côtés larges (66) s'étendent transversalement par rapport aux parois latérales (30) des canaux longitudinaux (34).

3. Balai d'essuie-glace (10) selon la revendication 1, **caractérisé en ce que** l'une des pièces intermédiaires (20) est reliée solidement aux éléments de support (36, 64).

4. Balai d'essuie-glace (10) selon l'une quelconque des revendications 1 à 3, **caractérisé en ce que** les parties de support (12, 14, 16, 18, 20) sont reliées les unes aux autres par soudage, en particulier par soudage aux ultrasons, par collage ou similaire.

5. Balai d'essuie-glace (10) selon l'une quelconque des revendications 1 à 4, **caractérisé en ce que** l'élément de raccordement (50) repose de manière fixe sur une partie formant pont (52) qui entoure par des joues latérales (54) les pièces intermédiaires (20) et qui est montée sur les éléments d'articulation (22) à l'aide de moyeux (56).

6. Balai d'essuie-glace (10) selon la revendication 1, **caractérisé en ce que** la raclette de balai d'essuie-glace (38) possède une raclette de tête (46) dotée de deux rainures longitudinales (47) séparées par un élément jointif (48), dans lesquelles rainures longitudinales viennent en prise les rails de retenue (28), les éléments de support (36) s'étendant dans les canaux longitudinaux (34) latéralement par rapport à la raclette de tête (46) et une lèvre de balai d'essuie-glace (40) étant reliée à la raclette de tête (46) à l'aide d'un élément jointif basculant (42), et la raclette de balai d'essuie-glace (38) étant fabriquée au moyen d'un procédé de coextrusion de deux matières, la partie entourée par les rails de retenue (28) et l'élément jointif (48) entre les rainures longitudinales (47) étant constitués d'un matériau plus rigide que le reste de la raclette de balai d'essuie-glace (38).
